# EUROPEAN PATENT SPECIFICATION

(11) **EP 4 186 649 B1**
(45) Date of publication and mention of the grant of the patent: **29.04.2026**
(21) Application number: 21210443.4
(22) Date of filing: 25.11.2021
(51) Int. Cl.: B25J 9/16

(54) **METHOD OF OBJECTIVE MTP LATENCY MEASUREMENT IN A TELE-OPERATION WITH REMOTE VISION-THROUGH MR**
VERFAHREN ZUR OBJEKTIVEN MTP-LATENZMESSUNG IN EINEM TELEBETRIEB MIT FERNSICHT DURCH MR
PROCÉDÉ DE MESURE OBJECTIVE DE LA LATENCE MTP DANS UNE TÉLÉOPÉRATION AVEC VISION À DISTANCE PAR MR

(43) Date of publication of application: 31.05.2023
(73) Proprietor: Deutsche Telekom AG, 53113 Bonn (DE)
(72) Inventor: YUN, Harrison Hongseo, 12203 Berlin (DE)
(74) Representative: Vossius & Partner Patentanwälte Rechtsanwälte mbB

(56) References cited:
- US-A1- 2015 117 466
- THEOFILIS KONSTANTINOS ET AL: "Panoramic view reconstruction for stereoscopic teleoperation of a humanoid robot", 2016 IEEE-RAS 16TH INTERNATIONAL CONFERENCE ON HUMANOID ROBOTS (HUMANOIDS), IEEE, 15 November 2016 (2016-11-15), pages 242 - 248, XP033036040, [retrieved on 20161230], DOI: 10.1109/HUMANOIDS.2016.7803284
- TOAL DANIEL ET AL: "Real-Time Video Latency Measurement between a Robot and Its Remote Control Station: Causes and Mitigation", WIRELESS COMMUNICATIONS AND MOBILE COMPUTING, vol. 2018, no. 2018, 1 January 2018 (2018-01-01), pages 1 - 19, XP093352887, ISSN: 1530-8669, DOI: 10.1155/2018/8638019

## Description

The present invention relates to a method for objectively measuring and monitoring a motion-to-photon (MTP) latency in a teleoperation system with a remote vision-through mixed reality (MR).

US 2015/117466 A1 relates to measuring an inherent latency of a communications link of a teleoperation system which varies unpredictably over at least a first window of time.

An MTP latency is an end-to-end latency that is accumulated from the latency of each of transactions in a teleoperation system with a remote vision-through MR. An MTP latency is one of the main factors that bring a direct impact on a Quality of Experience (QoE) while the system is in operation. In general, such a teleoperation system with a remote vision-through MR consists of multiple transactions and processes, for instance, including motion-sensing and tracking, mobile camera sensing, physical movement of an object, video encoding, video decoding, network transmission, local asynchronous warping, and so on. Each of these multiple transactions shall cause transaction latencies that are accumulated to increase an end-to-end MTP latency.

A teleoperation system with a remote vision-through MR is getting more attention since a demand from the industry has increased in many domains such as tele-driving of automotive, teleoperation of industrial robots and teleoperation of drones. Furthermore, the advent of 5G mobile networks with many innovative technologies, such as network slicing technology and adaptively managed latency, can intensify an improved mobility of remotely located objects in terms of a wider coverage and shorter latency. In every teleoperation system with a remote vision-through MR, the MTP latency is a very critical QoE parameter which affects the service quality directly. For example, if the MTP latency is not short enough while the system is in operation, then an MR user cannot operate remotely located objects conveniently since all the refreshed screens shown on the MR display panel will be displayed with longer lags between the MR user's head, body, arm or hand motions and remotely located object's corresponding movement. However, the measurement of an MTP latency is a very complicated task since such an MTP latency is a summation of series of partial latencies caused in each of separated transactions and separated hardware devices. Furthermore, those partial latencies are accumulated through multiple network connectivity. Therefore, traditionally, the MTP latency measurement was conducted in a labor-centric way, i.e., by taking pictures of the MR user's motions and those of the remotely located object's corresponding movement with high-speed cameras and comparing them to count an MTP latency in millisecond(s).

This measurement method based on a high-speed camera has several problems and restrictions. Firstly, it cannot measure the MTP latency precisely since it is highly dependent on a human's perception. Secondly, it cannot provide a systematic measurement in a real-time basis so that it can support neither real-time-based monitoring nor log data accumulation.

It is thus an object of the present invention to provide a method for measuring an MTP latency in an objective way which obviate disadvantages of the MTP latency measurement methods according to the prior art.

The invention is set out in the appended set of claims.

### BRIEF DESCRIPTION OF THE DRAWINGS

- Fig. 1: shows an overview of a teleoperation system in which the method for measuring an MTP latency according to an embodiment of the invention can be applied.
- Fig. 2: shows the method for measuring an MTP latency for a head and/or a body movement according to an embodiment of the invention.
- Fig. 3: shows the method for measuring an MTP latency for an arm and/or a hand movement according to an embodiment of the invention.

### DETAILED DESCRIPTION OF THE DRAWINGS

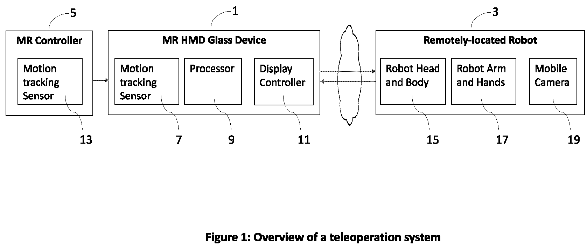

Fig. 1 shows an overview of a teleoperation system in which the method for measuring an MTP latency according to an embodiment of the invention can be applied.

A teleoperation system comprises a teleoperation client and a teleoperation object. The teleoperation client comprises a first motion tracking sensor 7, a processor 9 and a display controller 11. The first motion tracking sensor 7 is mounted on an MR HMD glass device 1 for sensing a motion of an MR user (a first object). The first motion tracking sensor 7 may comprise a 3 up to 6 Degrees of Freedom (DoF) sensor(s) which may be an orientation and/or tracking sensor for sensing a head and/or body movement of the MR user. The processor 9 and the display controller 11 are configured in the MR HMD glass device.

The processor 9 configured in an MR HMD glass device 1 is connected to an MR controller 5 via a communication network such as Bluetooth. On the MR controller 5 a second motion tracking sensor 13 is mounted for sensing a movement of the MR user. For example, the MR controller may be held by hand or attached on an arm of the MR user. The second motion tracking sensor 13 mounted on the MR controller 5 may comprise a 3 up to 6 Degrees of Freedom (DoF) sensor which is an orientation and/or pose tracking sensor for sensing an arm and/or hand movement of the MR user.

The first and/or the second motion tracking sensor 7, 13 generates motion tracking data representing the motion of the MR user. The motion tracking data generated by the motion tracking sensor 13 of the MR controller 5 is transmitted to the processor 9 of the MR HMD glass device 1 via the communication network such as Bluetooth.

Time information associated with motion tracking data is assigned to the motion tracking data representing the motion of the MR user sensed by the motion tracking sensor(s) 7, 13. If the first time information indicates the time at which the motion tracking data is obtained at the teleoperation client, the first time information may be assigned by the motion tracking sensor(s) 7, 13 by using a time stamp when the motion of the first object is sensed. Alternatively or additionally, the first time information may be assigned by the processor 9 by using a time stamp at the time of reception of the motion tracking data obtained by the motion tracking sensor(s) 7, 13 are received at the processor. If the first time information indicates the time at which the motion tracking data is transmitted from the teleoperation client to the teleoperation object, the first time information may be assigned by the processor 9 by using a time stamp at the time of transmission.

Thus, when an MR user triggers the first moment to move the MR user's head and/or body or arm(s) and/or hand(s), time information is assigned to the pose and/or orientation tracking data as first time information associated with the movement. The time information assignment may be carried out by a teleoperation client software running in an MR HDM glass or 5G smartphone in a 5G smartphone-tethered MR model. Further, the motion tracking data along with the time information may be stored at the teleoperation client.

Further, the motion tracking data along with time information is transferred from the teleoperation client to a teleoperation object for controlling the motion of a second object at the teleoperation object. If the teleoperation object comprises a remotely-located robot 3, the second object is a robot head and/or body 15 and/or robot arm(s) and/or hand(s) 19. The teleoperation object further comprises a mobile camera 19 which is equipped with the robot 3.

A processor at the teleoperation object (e.g. mounted on the robot) controls the motion of the second object based on the received motion tracking data representing the motion of the first objects. If the teleoperation object comprises robot arms and hands 17, they are manipulated as synchronized with the MR user's arm and hand motion. At this moment, the mobile camera 19 senses the motion of the second object by capturing RGB signals and generates image frames as, e.g. video data, while the motion tracking data is kept synchronized with each image frame. That is, obtaining image data for the motion of the second object is carried out based on the received motion tracking data by synchronization of the controlling the motion of the second object and the obtaining the image data. Each image frame generated by the mobile camera 19 is compressed by a video encoder of the processor at the teleoperation object and transmitted to the teleoperation client via a communication network, e.g. a 5G network.

The processor 9 at the teleoperation client decodes the encoded video data received. The video data decoded comprises the image frames synchronized with the motion tracking data and the first time information. The processor 9 at the teleoperation client pushes the video data to the display controller 11 to be displayed at a display panel configured in the MR glass device 1. The processor 9 measures the MTP latency by retrieving and comparing the time difference between the first time information, e.g. a timestamp information included in the motion tracking data, and the current time at the time of transmission of the video data to the display controller. Additionally, a (further) partial latency such as a latency incurred from transmission of the video data to display of the video data on the display panel may be estimated and added as an offset.

Thus, motion tracking data obtained at the teleoperation client is kept and managed together with the time information through the end-to-end transaction across the network environment and the remotely operated objects until the final refreshed image data is ready to be transferred to the display panel via a display port or any other standard interfaces.

In this example, the time information associated with the image data indicates the time at which the image data is sent to a display controller at the teleoperation client. Additionally, second time information may indicate the time at which the image data for the motion of the second object is generated at the teleoperation object and/or the time at which the image data for the motion of the second object is transmitted from the teleoperation object to the teleoperation client.

If the second time information indicates the time at which the image data for the motion of the second object is generated at the teleoperation object, the second time information may be generated by using a time stamp at the time of capturing RGB signals at the mobile camera or using a time stamp at the time of encoding image frames at the processor. If the second time information indicates the time at which the image data for the motion of the second object is transmitted from the teleoperation object to the teleoperation client, the second time information may be generated by using a time stamp at the time of transmission of the image frame generated or encoded.

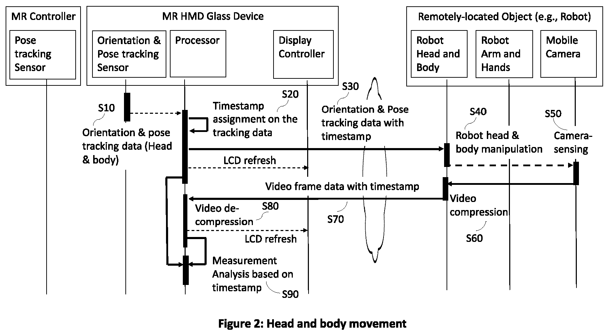

Fig. 2 shows the method for measuring an MTP latency for a head and/or a body movement according to an embodiment of the invention.

When an MR user triggers the first moment to move the user's head and/or body, the movement is detected in step S10 by using an orientation and pose tracking sensor mounted on an MR HMD glass device. The orientation and pose tracking sensor senses an orientation and pose change such as an orientation change of the user's head, a pose change of the user's head, a horizontal or vertical movement of the user's head and/or body and so on. In step S20, time information associated with the pose and/or orientation tracking data is assigned to the pose and/or orientation tracking data, for example in a form of a time stamp by a teleoperation client software running in a processor. The processor is configured in an MR HDM glass.

In step S30, the pose and/or orientation tracking data is transferred along with the time information assigned to the pose and/or orientation tracking data to a remotely located object so that it can control the operation of the remotely located object. The remotely located object such as a robot equipped with a mobile camera receives the pose and/or orientation tracking data together with the time information.

In step S40, a processor at the teleoperation object changes the orientation and position of the robot head and/or robot body based on the orientation and pose tracking data that represent the movement of the MR user's head and/or body. The processor may be mounted on the robot head and/or the robot body. At this moment, the mobile camera captures in step S50 all RGB signals of the robot head and/or the robot body in a form of video data while each orientation and pose tracking data is kept synchronized with each image frame.

In step S60, image frames are compressed by a video encoder at the teleoperation object and transmitted in step S70 to the MR HMD glass device along with the time information (e.g. the time stamp) associated with the orientation and pose tracking data synchronized with the image frames via a 5G network environment.

The encoded image frames are received at the teleoperation client. The processor at the teleoperation client decodes the received image frames using a video decoder in step S80 and send to a display panel (e.g. an LCD) in the MR HMD glass device.

The processor measures the MTP latency in step S90 using the time information associated with the motion tracking data and the time information associated with the image data. For example, the processor retrieves and compares the time difference between time information on the time stamp and the time information representing the time when the image frame is sent to the display panel.

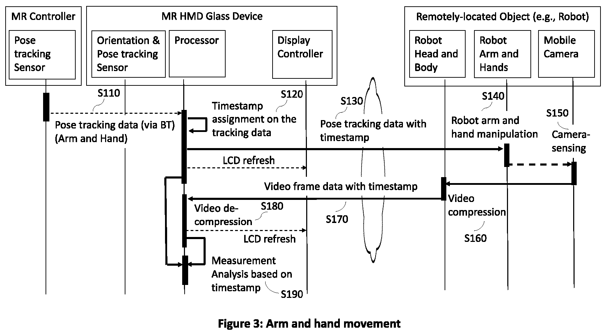

Fig. 3 shows the method for measuring an MTP latency for an arm and/or a hand movement according to an embodiment of the invention.

The embodiment according to Fig. 3 differs from the embodiment according to Fig. 2 in that instead of a head and/or a body movement, an arm and/or a hand movement is sensed. In the embodiment according to Fig. 3, thus, a pose tracking sensor mounted on a further MR accessory device other than an MR HMD glass device such as an MR controller is used. The steps S110, S120, ..., S190 in Fig. 3 correspond to the steps S10, S20, ..., S90 of the embodiment according to Fig. 2 except for differences explained in the following.

In step S110, the pose tracking data is generated at the pose tracking sensor implemented in an MR controller and sent to the processor in an MR HMD glass device via a Bluetooth connection. The latency caused by the Bluetooth connection between the MR controller or any other MR accessory devices and the MR HMD glass or a 5G smartphone in a 5G smartphone-tethered MR model may be estimated and included as an offset when the time information is assigned by a processor in the MR HMD glass device in step S120.

The pose tracking data is sent to a processor at the teleoperation object in step S140 for controlling robot arms and hands to manipulate them as being synchronized with the MR user's arm and hand motion. The processor at the teleoperation object may be mounted on the robot arm and/or the robot hand. At this moment, the mobile camera captures in step S150 all RGB signals of the robot's arm and/or robot's hand in a form of video data while each pose tracking data is kept synchronized with each image frame.

What has been described and illustrated herein are embodiments of the invention along with some of variations. The terms, descriptions and figures used herein are set forth by way of illustration only and are not meant as limitations. Those skilled in the art will recognize that many variations are possible within the scope of the invention, which is intended to be defined by the following claims in which all terms are meant in their broadest reasonable sense unless otherwise indicated.

Furthermore, in the claims the word "comprising" does not exclude other elements or steps, and the indefinite article "a" or "an" does not exclude a plurality. A single unit may fulfil the functions of several features recited in the claims. Any reference signs in the claims should not be construed as limiting the scope.

## Claims

1. A method for measuring a motion-to-photon, MTP, latency in a teleoperation system,
wherein the teleoperation system comprises a teleoperation client and a teleoperation object;
wherein the teleoperation client comprises a mixed reality head mounted, MR HMD, glass device, comprising an orientation and pose tracking sensor configured detect a motion a user's head and/or body;
wherein the teleoperation object comprises a remotely located robot (3) with a robot head and/or body configured to be manipulated as synchronized with the MR user's head and/or body;
wherein the robot (3) is equipped with a mobile camera which is configured to capture RGB signals of the robot head and/or body and configured to obtain second time information associated with the image data; and
wherein the method is further comprising:
obtaining (S10) pose and orientation tracking data for a motion of the user's head and/or body at the MR HMD glass device,
assigning (S20) first time information to the pose and orientation tracking data,
transmitting (S30) the pose and orientation tracking data and the first time information from the MR HMD glass device to the robot (3),
controlling (S40) a motion of the robot head and/or body based the pose and orientation tracking data,
obtaining image data (S50) from the camera RGB signals of the robot's head and/or body, while each orientation and pose tracking data is kept synchronized with each image frame,
compressing (S60) the image frames by a video encoder at the teleoperation object and transmitting (S70) the image frames to the MR HMD glass device along with the first time information associated with the orientation and pose tracking data synchronized with the image frames,
decoding the received image frames using a video decoder and sending to the image frames to a display panel in the MR HMD glass device, and
measuring (S90) an MTP latency by a processor in the MR HMD glass device, based on the time difference between the first time information and a time information representing the time when the image frame is sent to the display panel.

2. A method for measuring a motion-to-photon, MTP, latency in a teleoperation system,
wherein the teleoperation system comprises a teleoperation client and a teleoperation object;
wherein the teleoperation client comprises a mixed reality head mounted, MR HMD, glass device, and a MR controller connected to the MR HMD glass device comprising a pose tracking sensor configured detect a motion a user's arm and/or hand,
wherein the teleoperation object comprises a remotely located robot (3) with a robot arm and/or hand configured to be manipulated as synchronized with the MR user's arm and/or hand;
wherein the robot (3) is equipped with a mobile camera which is configured to capture RGB signals of the robot arm and/or hand and configured to obtain second time information associated with the image data; and
wherein the method is further comprising:
obtaining (S110) pose a tracking data for a motion of the user's arm and/or hand at the MR HMD glass device from the MR controller,
assigning (S120) first time information to the pose tracking data,
transmitting (S130) the pose tracking data and the first time information from the MR HMD glass device to the robot (3),
controlling (S140) a motion of the robot's arm and/or hand based the pose orientation tracking data,
obtaining image data (S150) from the camera RGB signals of the robot's hand and/or arm, while the pose tracking data is kept synchronized with each image frame,
compressing (S160) the image frames by a video encoder at the teleoperation object and transmitting (S170) the image frames to the MR HMD glass device along with the first time information associated with the pose tracking data synchronized with the image frames,
decoding the received image frames using a video decoder and sending to the image frames to a display panel in the MR HMD glass device, and
measuring (S190) an MTP latency by a processor in the MR HMD glass device, based on the time difference between the first time information and a time information representing the time when the image frame is sent to the display panel.

3. The method of claim 1 or 2, wherein the first time information indicates the time at which the pose and/or orientation tracking data is obtained at the teleoperation client and/or the time at which the pose and/or orientation tracking data is transmitted from the teleoperation client to the teleoperation object.

## Patentansprüche

1. Verfahren zum Messen einer Motion-to-Photon-Latenz, MTP- Latenz, in einem Teleoperationssystem,
wobei das Teleoperationssystem einen Teleoperations-Client und ein Teleoperationsobjekt aufweist;
wobei der Teleoperations-Client eine am Kopf befestigte Mixed-Reality-Brillenvorrichtung, MR HMD-Brillenvorrichtung, aufweist, aufweisend einen Orientierungs- und Posenverfolgungssensor, der konfiguriert ist, um eine Bewegung eines Kopfes und/oder eines Körpers des Benutzers zu erfassen;
wobei das Teleoperationsobjekt einen sich entfernt befindlichen Roboter (3) mit einem Roboterkopf und/oder -körper aufweist, der konfiguriert ist, um synchron mit dem Kopf und/oder Körper des MR-Benutzers manipuliert zu werden;
wobei der Roboter (3) mit einer mobilen Kamera ausgestattet ist, die konfiguriert ist, um RGB-Signale des Roboterkopfes und/oder -körpers zu erfassen, und konfiguriert ist, um zweite Zeitinformationen zu erhalten, die mit den Bilddaten verbunden sind; und
das Verfahren ferner aufweisend:
Erhalten (S10) von Posen- und Orientierungsverfolgungsdaten für eine Bewegung des Kopfes und/oder des Körpers des Benutzers an der MR HMD-Brillenvorrichtung,
Zuweisen (S20) von ersten Zeitinformationen zu den Posen- und Orientierungsverfolgungsdaten,
Übertragen (S30) der Posen- und Orientierungsverfolgungsdaten und der ersten Zeitinformationen von der MR HMD-Brillenvorrichtung an den Roboter (3),
Steuern (S40) einer Bewegung des Roboterkopfes und/oder -körpers basierend auf den Posen- und Orientierungsverfolgungsdaten,
Erhalten von Bilddaten (S50) aus den Kamera-RGB-Signalen des Kopfes und/oder des Körpers des Roboters, wobei die Orientierungs- und Posenverfolgungsdaten mit jedem Bild-Frame synchronisiert werden,
Komprimieren (S60) der Bild-Frames durch einen Videocodierer an dem Teleoperationsobjekt und Übertragen (S70) der Bild-Frames an die MR HMD-Brillenvorrichtung zusammen mit den ersten Zeitinformationen, die mit Orientierungs- und Posenverfolgungsdaten verbunden sind, die den mit den Bild-Frames synchronisiert sind,
Decodieren der empfangenen Bild-Frames unter Verwendung eines Videodecodierers und Senden der Bild-Frames an ein Anzeigefeld in der MR HMD-Brillenvorrichtung, und
Messen (S90) einer MTP-Latenzzeit durch einen Prozessor in der MR HMD-Brillenvorrichtung, basierend auf der Zeitdifferenz zwischen den ersten Zeitinformationen und Zeitinformationen, die den Zeitpunkt darstellen, zu dem der Bild-Frame an das Anzeigefeld gesendet wird.

2. Verfahren zum Messen einer Motion-to-Photon-Latenz, MTP- Latenz, in einem Teleoperationssystem,
wobei das Teleoperationssystem einen Teleoperations-Client und ein Teleoperationsobjekt aufweist;
wobei der Teleoperations-Client eine am Kopf befestigte Mixed-Reality-Brillenvorrichtung, MR HMD-Brillenvorrichtung, aufweisend einen MR-Controller, der mit der MR HMD-Brillenvorrichtung verbunden ist und einen Posenverfolgungssensor aufweist, der konfiguriert ist, um eine Bewegung eines Arms und/oder einer Hand eines Benutzers zu erfassen,
wobei das Teleoperationsobjekt einen sich entfernt befindlichen Roboter (3) mit einem Roboterarm und/oder einer Roboterhand aufweist, der/die konfiguriert ist, um synchron mit dem Arm und/oder der Hand des MR-Benutzers manipuliert zu werden;
wobei der Roboter (3) mit einer mobilen Kamera ausgestattet ist, die konfiguriert ist, um RGB-Signale des Roboterarms und/oder der Roboterhand zu erfassen, und konfiguriert ist, um zweite Zeitinformationen zu erhalten, die mit den Bilddaten verbunden sind; und
das Verfahren ferner aufweisend:
Erhalten (S110) von Posenverfolgungsdaten für eine Bewegung des Arms und/oder der Hand des Benutzers an der MR HMD-Brillenvorrichtung von dem MR-Controller,
Zuweisen (S120) von ersten Zeitinformationen zu den Posenverfolgungsdaten,
Übertragen (S130) der Posenverfolgungsdaten und der ersten Zeitinformationen von der MR HMD-Brillenvorrichtung an den Roboter (3),
Steuern (S140) einer Bewegung des Roboterarms und/oder der Roboterhand basierend auf den Posen-Orientierungsverfolgungsdaten,
Erhalten von Bilddaten (S150) aus den Kamera-RGB-Signalen der Hand und/oder des Arms des Roboters, wobei die Posenverfolgungsdaten mit jedem Bild-Frame synchronisiert werden,
Komprimieren (S160) der Bild-Frames durch einen Videocodierer an dem Teleoperationsobjekt und Übertragen (S170) der Bild-Frames an die MR HMD-Brillenvorrichtung zusammen mit den ersten Zeitinformationen, die mit den Posenverfolgungsdaten verbunden sind, die mit den Bild-Frames synchronisiert sind,
Decodieren der empfangenen Bild-Frames unter Verwendung eines Videodecodierers und Senden der Bild-Frames an ein Anzeigefeld in der MR HMD-Brillenvorrichtung, und
Messen (S190) einer MTP-Latenzzeit durch einen Prozessor in der MR HMD-Brillenvorrichtung, basierend auf der Zeitdifferenz zwischen den ersten Zeitinformationen und Zeitinformationen, die den Zeitpunkt darstellen, zu dem der Bild-Frame an das Anzeigefeld gesendet wird.

3. Verfahren nach Anspruch 1 oder 2, wobei die ersten Zeitinformationen den Zeitpunkt angeben, zu dem die Posen- und/oder Orientierungsverfolgungsdaten an dem Teleoperations-Client erhalten werden und/oder den Zeitpunkt, zu dem die Posen- und/oder Orientierungsverfolgungsdaten von dem Teleoperations-Client an das Teleoperationsobjekt übertragen werden.

## Revendications

1. Procédé de mesure d'une latence mouvement-photon, MTP, dans un système de téléopération,
dans lequel le système de téléopération comprend un client de téléopération et un objet de téléopération ;
dans lequel le client de téléopération comprend un dispositif en verre de casque de réalité mixte, HMD RM, comprenant un capteur de suivi d'orientation et de pose configuré pour détecter un mouvement de tête et/ou de corps d'utilisateur ;
dans lequel l'objet de téléopération comprend un robot situé à distance (3) avec une tête et/ou un corps de robot configurés pour être manipulés de manière synchronisée avec la tête et/ou le corps de l'utilisateur de RM ;
dans lequel le robot (3) est équipé d'une caméra mobile qui est configurée pour capturer des signaux RVB de la tête et/ou du corps de robot et configurée pour obtenir des secondes informations temporelles associées aux données d'image ; et
dans lequel le procédé comprend en outre :
l'obtention (S10) de données de suivi de pose et d'orientation pour un mouvement de la tête et/ou du corps d'utilisateur au niveau du dispositif de verre de HMD RM,
l'attribution (S20) de premières informations temporelles aux données de suivi de pose et d'orientation,
la transmission (S30) des données de suivi de pose et d'orientation et des premières informations temporelles du dispositif en verre de HMD RM au robot (3),
la commande (S40) d'un mouvement de la tête et/ou du corps de robot sur la base des données de suivi de pose et d'orientation,
l'obtention de données d'image (S50) à partir des signaux RVB de caméra de la tête et/ou du corps de robot, tandis que chaque donnée de suivi d'orientation et de pose est maintenue synchronisée avec chaque trame d'image,
la compression (S60) des trames d'image par un encodeur vidéo au niveau de l'objet de téléopération et la transmission (S70) des trames d'image au dispositif en verre de HMD RM avec les premières informations temporelles associées aux données de suivi d'orientation et de pose synchronisées avec les trames d'image,
le décodage des trames d'image reçues à l'aide d'un décodeur vidéo et l'envoi des trames d'image à un panneau d'affichage dans le dispositif en verre de HMD RM, et
la mesure (S90) d'une latence MTP par un processeur dans le dispositif en verre de HMD RM, sur la base de la différence temporelle entre les premières informations temporelles et des informations temporelles représentant le moment où la trame d'image est envoyée au panneau d'affichage.

2. Procédé de mesure d'une latence mouvement-photon, MTP, dans un système de téléopération,
dans lequel le système de téléopération comprend un client de téléopération et un objet de téléopération ;
dans lequel le client de téléopération comprend un dispositif en verre de casque à réalité mixte, HMD RM, et un dispositif de commande RM connecté au dispositif en verre de HMD RM comprenant un capteur de suivi de pose configuré pour détecter un mouvement de bras et/ou de main d'utilisateur,
dans lequel l'objet de téléopération comprend un robot situé à distance (3) avec un bras et/ou une main de robot configurés pour être manipulés de manière synchronisée avec le bras et/ou la main d'utilisateur de RM ;
dans lequel le robot (3) est équipé d'une caméra mobile qui est configurée pour capturer des signaux RVB du bras et/ou de la main de robot et configurée pour obtenir des secondes informations temporelles associées aux données d'image ; et
dans lequel le procédé comprend en outre :
l'obtention (S110) de données de suivi de pose d'un mouvement du bras et/ou de la main d'utilisateur sur le dispositif en verre de HMD RM à partir du dispositif de commande RM,
l'attribution (S120) de premières informations temporelles aux données de suivi de pose,
la transmission (S130) des données de suivi de pose et des premières informations temporelles du dispositif en verre de HMD RM au robot (3),
la commande (S140) d'un mouvement du bras et/ou de la main de robot sur la base des données de suivi d'orientation de pose,
l'obtention de données d'image (S150) à partir des signaux RVB de la caméra de la main et/ou du bras de robot, tandis que les données de suivi de pose sont maintenues synchronisées avec chaque trame d'image,
la compression (S160) des trames d'image par un encodeur vidéo au niveau de l'objet de téléopération et la transmission (S170) des trames d'image au dispositif en verre de HMD RM avec les premières informations temporelles associées aux données de suivi de pose synchronisées avec les trames d'image,
le décodage des trames d'image reçues à l'aide d'un décodeur vidéo et l'envoi des trames d'image à un panneau d'affichage dans le dispositif en verre de HMD RM, et
la mesure (S190) d'une latence MTP par un processeur dans le dispositif en verre de HMD RM, sur la base de la différence temporelle entre les premières informations temporelles et des informations temporelles représentant le moment où la trame d'image est envoyée au panneau d'affichage.

3. Procédé selon la revendication 1 ou 2, dans lequel les premières informations temporelles indiquent le moment auquel les données de suivi de pose et/ou d'orientation sont obtenues au niveau du client de téléopération et/ou le moment auquel les données de suivi de pose et/ou d'orientation sont transmises du client de téléopération à l'objet de téléopération.
